# EUROPEAN PATENT APPLICATION

(11) **EP 1 136 307 A2**
(43) Date of publication of application: **26.09.2001**
(21) Application number: 01105695.9
(22) Date of filing: 07.03.2001
(51) Int. Cl.: B60K 41/02, B60K 41/08, F16H 61/18, F16H 61/02

(54) **Apparatus for selective control of a clutch**

(30) Priority: 21.03.2000 JP 2000083272
(71) Applicant: ISUZU MOTORS LIMITED, Shinagawa-ku, Tokyo (JP)
(72) Inventor: Nishimura, Nobuyuki, c/o Isuzu Motors Ltd., Kawasaki-shi, Kanagawa (JP)
(74) Representative: Schaumburg, Thoenes & Thurn

(57) **Abstract**

A shift controller (56) used with a selective clutch assembly. The selective clutch assembly includes an automatic clutch device for automatically disengaging and engaging a clutch (3) with a clutch actuator (4), and a manual clutch device for disengaging and engaging the clutch (3) upon stamping of a clutch pedal (62). In order to shift a gear position of a transmission (2) by a so-called double clutching operation, the clutch (3) is disengaged, a transmission (2) is brought into a neutral condition, the clutch (3) is engaged, an engine revolution speed is amended, the clutch is disengaged again and a certain transmission gear is engaged. When the clutch pedal (62) is kept stamped for a predetermined period after start of the shifting, however, the shifting is prohibited.

## Description

The instant application claims priority of Japanese Patent Application No. 2000-83272 filed on March 21, 2000, the entire disclosure of which is incorporated herein by reference.

The present invention relates to an apparatus for controlling a selective clutch assembly of a vehicle.

An automatic clutch is a clutch that is located between an engine and a transmission and automatically disengaged and engaged in accordance with disengagement and engagement signals/commands issued from a control unit when a vehicle is started, a transmission is shifted up and down and the vehicle is stopped. Such automatic clutch is sometimes equipped with a clutch pedal, upon stamping of which clutch pedal the clutch is disengaged and engaged regardless of the disengagement and engagement signals from the control unit. The clutch pedal is used when the control unit fails or cannot perform a decent control such as when the vehicle should be started forward or moved backward at a very slow speed.

If the automatic clutch with the clutch pedal is provided in the vehicle, so-called "double clutching" is often performed when the transmission is shifted down. Specifically, in order to match (or synchronize) a rotation speed of a certain gear with that of an associated sleeve in the transmission, the clutch is first disengaged, the transmission is brought into a neutral position, then the clutch is engaged, and the engine rotation speed is raised by stamping an accelerator pedal in the neutral condition (racing). Subsequently, the clutch is disengaged again and a transmission gear is moved to a certain position.

However, if the clutch pedal is stamped accidentally during the double clutching operation, the clutch disengagement by this clutch pedal stamping is given priority over the clutch engagement by the control unit. Thus, it is not possible to engage the clutch. Even if the control unit causes the racing, the rotation of the gear does not synchronize with that of the sleeve in the transmission. As a result, gears rattle upon shift down.

In particular, if the transmission sleeve does not have a so-called cone-type synchronization mechanism, the gear position change is practically impossible unless the rotation speed of the gear does not match that of the mating sleeve. If the shifting is conducted by force, it often damages the gears in the transmission.

An object of the present invention is to provide an apparatus for controlling a selective clutch assembly that can prevent rattling and damaging of gears when the clutch pedal is depressed unintentionally during shifting.

According to one embodiment of the present invention, there is provided an apparatus for controlling a selective clutch assembly that can achieve the above object. The selective clutch assembly may include a friction clutch, an automatic clutch device for automatically disengaging and engaging the clutch with a clutch actuator under the control of a controller, and a manual clutch device for disengaging and engaging the clutch upon stamping of a clutch pedal. The control apparatus includes a second controller having a clutch control unit (unit for double clutching operation) for disengaging the clutch, bringing a transmission into a neutral position, engaging the clutch, amending an engine revolution speed, disengaging the friction clutch again and engaging a transmission gear into a certain position to shift the transmission. The control apparatus further includes a shift control unit (or shift prohibition unit) for prohibiting shifting of the transmission when the clutch pedal is kept stamped for a predetermined period after start of the shifting or during the shifting. Therefore, when a driver unintentionally stamps the clutch pedal during shifting, the shifting is prohibited. Accordingly, gears do not rattle and are not damaged.

The second controller may change a target gear (gear position to be selected in a next shifting) to a start gear (gear suitable for starting of a vehicle) so that a vehicle is brought into a start stand-by condition, when a vehicle speed is zero after the shift prohibition unit prohibits the shifting. The second controller may cancel the shift prohibition only when the clutch pedal is released from the stamped condition. Alternatively, the second controller may cancel the shift prohibition only when a vehicle speed is not zero and the clutch pedal is released from the stamped condition after the shift prohibition is executed. The second controller may select a transmission gear suited for current driving conditions as a target gear upon canceling of the shift prohibition.

If a target gear is the neutral, the shift prohibition may not be performed. The shift prohibition may not be performed if the shifting takes place using a mechanical synchronization unit. The clutch disengagement and engagement by the manual clutch device may be given priority over the clutch disengagement and engagement by the automatic clutch device. The clutch may be disengaged when the shift prohibition is performed.

Other objects, aspects and advantages of the present invention will become apparent to those skilled in the art to which the invention pertains from the subsequent detailed description and the appended claims, taken in conjunction with the accompanying drawings.

Figure 1 illustrates a flowchart of control according to the present invention that is applied to a selective clutch controller;

Figure 2 illustrates a flowchart of control after a shift prohibition control flag is raised in the flowchart shown in Figure 1;

Figure 3 illustrates relationship between clutch rotation speed and clutch disengagement and engagement; and

Figure 4 illustrates an automatic transmission assembly equipped with a selective clutch.

An embodiment of the present invention will now be described with reference to the accompanying drawings.

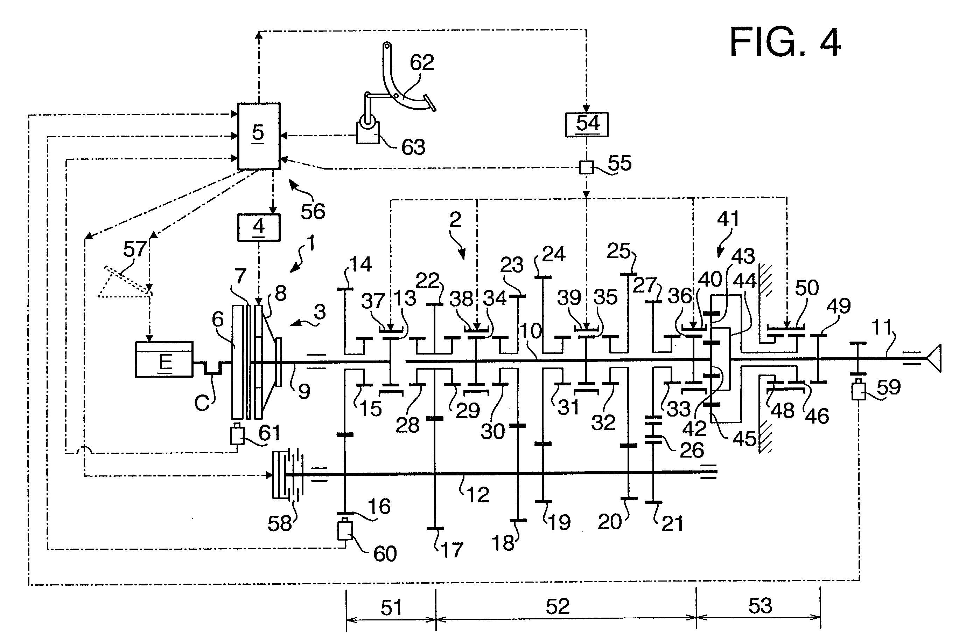

Referring first to Figure 4, an automatic clutch assembly 1 includes a clutch 3 located between an engine E and a transmission 2, a clutch actuator 4 for disengaging and engaging the clutch 3, and a controller 5 for issuing disengagement and engagement commands to the clutch actuator 4. The clutch actuator 4 disengages and engages the clutch 3 in accordance with the disengagement and engagement commands from the controller 5 when the vehicle is started and stopped and the transmission is shifted up and down.

The clutch 3 includes a flywheel (drive plate) 6 connected to a crankshaft C of the engine E, a driven plate 7 that faces the flywheel 6, and a pressure plate 8 for sandwiching the driven plate 7 between the flywheel 6 and itself. The clutch actuator 4 moves the pressure plate 8 toward and apart from the flywheel 6 based on the clutch disengagement and engagement signals generated from the controller 5 so as to disengage and engage the clutch 3 for transferring the engine drive power to the transmission 2 and interrupting the same.

As illustrated, the transmission 2 has an input shaft 9 connected to the driven plate 7, a main shaft 10 coaxial to the input shaft, an output shaft 11 coaxial to the main shaft, and a counter shaft 12 in parallel to these shafts 9 to 11. The input shaft 9 has a spline 13 fixed thereto and supports an input gear 14. The input gear 14 has a spline 15 fixed thereon.

On the counter shaft 12, secured are an input counter shaft 16 in mesh with the input gear 14, a fourth counter gear 17, a third counter gear 18, a second counter gear 19, a first counter gear 20, and a reverse counter gear 21. On the main shaft 10, supported are a fourth main gear 22 in mesh with the fourth counter gear 17, a third main gear 23 in mesh with the third counter gear 18, a second main gear 24 in mesh with the second counter gear 19, a first main gear 25 in mesh with the first counter gear 20, and a reverse main gear 27 in mesh with the reverse counter gear 21 via an idle gear 26.

On the right and left sides of the fourth main gear 22, secured are splines 28 and 29 respectively. On the left side of the third main gear 23, secured is a spline 30. On the right side of the second main gear 24, secured is a spline 31. On the left side of the first main gear 25, secured is a spline 32. On the right side of the reverse main gear 27, secured is a spline 33. The main shaft 10 has a spline 34 fixed thereon between the splines 29 and 30, a spline 35 fixed thereon between the splines 31 and 32, and a spline 36 fixed thereon on the light side of the spline 33.

The spline 13 has a sleeve 37 that either connects the spline 13 to the adjacent spline 15 (or 28) or only engages with the spline 13 itself. The spline 34 has a sleeve 38 that connects the spline 34 to the adjacent spline 29 (or 30) or only engages with the spline 34 itself. The spline 35 has a sleeve 39 that connects the spline 35 to the adjacent spline 31 (or 32) or only engages with the spline 35 itself. The spline 36 has a sleeve 40 that connects the spline 36 to the adjacent spline 33 or only engages with the spline 36 itself.

The sleeve 37 possesses a conventional cone-type synchronization mechanism, but the sleeves 38, 39 and 40 do not. Therefore, when the transmission gear position should be changed using the sleeve 37, the shifting is possible even if the rotation speed of the sleeve 37 is not equal to that of the spline 15 (or 28). However, when the transmission is shifted using the sleeve 38, 39 or 40, it is impossible unless the rotation speed of the sleeve 38 matches the spline 29 (or 30), the rotation speed of the sleeve 39 matches the spline 31 (or 32), or the rotation speed of the sleeve 40 matches the spline 33.

On the right end of the main shaft 10, fixed is a sun gear 42 of a planetary gear mechanism 41. A plurality of planetary gears 43 are provided around the sun gear 42. These planetary gears 43 are supported by a single carrier 44. A ring gear 45 is provided to surround the planetary gears 43. A spline 46 is fixed to the ring gear 45, and a spline 48 is fixed to a transmission casing 47. The output shaft 11 is fixed to the carrier 44, and a spline 49 is fixed to the output shaft 11.

A sleeve 50 is provided for the splines 46, 48 and 49 to couple two adjacent splines 46 and 48, or 46 and 49. The sleeve 50 has a common cone-type synchronization mechanism. Therefore, when the gear position should be changed using the sleeve 50, it is possible even if the rotation speed of the sleeve 50 is not equal to that of the splines 46 and 48 (or 46 and 49). It should be noted that the sleeves 38, 39 and 40 do not have a cone-type synchronization mechanism so that a length of the transmission 2 can be reduced by that amount.

Each of the sleeves 37, 38, 39, 40 and 50 engages with an associated shift folk (not shown) that is moved by a gear shift unit 54 in an axial direction of the transmission in response to commands from the controller 5. For example, when the sleeve 37 rests on the spline 13 (neutral), the rotation of the input shaft 9 is not transferred to the input gear 14 so that the counter shaft 12, main shaft 10 and output shaft 11 are stopped.

When the sleeve 37 is moved over the splines 15 and 13, the input shaft rotation is transferred to the counter shaft 12 via the input gear 14 and input counter gear 16 at a raised speed, and therefore all the counter gears 16 to 21 and main gears 22 to 27 are caused to rotate. When the sleeve 37 is moved over the splines 13 and 28, the rotation of the input shaft 9 is then transferred to the counter shaft 12 via the fourth main gear 22 and fourth counter gear 17 at a reduced speed so that all the counter gears 16 to 21 and main gears 22 to 27 are caused to rotate at a slower speed.

If the sleeves 38, 39 and 40 are on the associated splines 34, 35 and 36 respectively, i.e., in the neutral positions, the main gears 22 to 27 simply idle about the main shaft 10 and the main shaft 10 does not rotate. When the sleeve 39 is shifted over the splines 35 and 32, the transmission first gear is engaged and the main shaft 10 is caused to rotate at a speed of the first gear. Likewise, when the sleeve 39 is located over the splines 35 and 31, the transmission is shifted to the second gear. When the sleeve 38 is positioned over the splines 34 and 30, the transmission is shifted to the third gear. When the sleeve 38 spans the splines 34 and 29, the transmission is shifted to the fourth gear. In these cases, the main shaft 10 rotates at a speed of the second, third or fourth gear.

The sun gear 42 secured on the right end of the main shaft 10 rotates at the same speed as the main shaft 10, thereby causing the planetary gears 43 and ring gear 45 to rotate. If the sleeve 50 spans the splines 48 and 46, the rotation of the sun gear 42 is transferred to the output shaft 11 at a speed reduced according to a reduction ratio determined by the planetary gear mechanism 41. When the sleeve 50 spans the splines 46 and 49, the rotation of the sun gear 42 is directly transferred to the output shaft 11.

The transmission 2 has two gear positions in a split gear assembly 51, four gear positions in a main gear assembly 52, and two gear positions in a range gear assembly 53 so that it has sixteen gear positions as a whole (2 x 4 x 2 = 16). The automatic clutch assembly 1 operates the clutch actuator 4 to disengage and engage the clutch 3 in accordance with the clutch disengagement and engagement commands generated from the controller 5 when the vehicle is started and stopped as well as when the transmission 2 is shifted by the gear shift unit 54.

A control device 56 for the selective clutch has a neutral switch 55 between the gear shift unit 54 and sleeves 37, 38, 39, 40 and 50. The neutral switch 55 detects which one of the main gears 22 to 27 is geared based on positions of the shift folks associated with the sleeves 37, 38, 39, 40 and 50 respectively. The neutral switch 55 also detects whether a current gear position is neutral or not. These detection results are sent to the controller 5.

Here, the gear position being neutral means that the sleeve 37 spans the splines 13 and 15 (or 13 and 28), the sleeve 38 is on the spline 34, the sleeve 39 is on the spline 35, the sleeve 40 is on the spline 36, and the sleeve 50 spans the splines 46 and 48 (or 46 and 49).

With these sleeves in such neutral positions (or the transmission is in the neutral position), if the clutch 3 is engaged and the engine E is raced by a virtual accelerator pedal 57, the main gears 22 to 27 and splines 28 to 33 are caused to rotate. This raises the rotation speed of the splines 28 to 33 to match (synchronize) the rotation of the splines 28 to 33 with the rotation of the sleeves 38 to 40 when shifting down.

Specifically, when shifting down, the controller 5 first disengages the clutch 3, shifts the transmission 2 into the neutral position and subsequently engages the clutch 3. Then the controller 5 causes the engine E to race thereby causing the rotation of the main gear 22, 23, 24, 25, 26 or 27 used for the gear position change to match that of the sleeve 38, 39 or 40. Subsequent to this, the controller 5 disengages the clutch 3 again to cause the sleeve 38, 39 or 40 used for the gear position change to engage with the associated spline 29, 30, 31, 32 or 33 of the main gear 22, 23, 24, 25, 26 or 27. This is the double clutching operation, and performed according to a double clutching program stored in the controller 5.

Since the controller 5 conducts the double clutching operation to match the rotation of the main gears 22 to 27 used for the gear position change to the rotation of the sleeves 38 to 40 used for the gear position change, smooth shifting can be expected although the sleeves 38, 39 and 40 do not have common cone-type synchronization units in the illustrated embodiment. It should be noted that the sleeves 38, 39 and 40 may have synchronization units. As mentioned earlier, the sleeves 37 and 50 have the synchronization units.

The imaginary accelerator pedal 57 is utilized to race the engine E in response to a command from the controller 5 when shifting down. If this racing is excessive, however, the rotation of the splines 28 to 33 of the main gears 22 to 27 used for the gear position change may become faster than the associated sleeves 38 to 40. Further, when shifting up, the splines 28 to 33 of the main gears 22 to 27 possibly rotates faster than the sleeves 38 to 40. Therefore, a counter shaft brake 58 is provided at the end of the counter shaft 12 to reduce the rotation speed of the splines 28 to 33, if necessary, to match it with the rotation of the sleeves 38 to 40 used for the gear position change. The detail of the counter shaft brake is disclosed in Japanese Patent Application No. 2000-83274.

The rotation of the sleeves 38 to 40 is detected by a rotation sensor 59 of the output shaft 11. Specifically, when the sleeve 50 engages with the splines 46 and 49, the rotation speed output from the rotation sensor 59 directly indicates the rotation speed of the sleeves 38 to 40. When the sleeve 50 engages with the splines 46 and 48, the output of the rotation sensor 59 is multiplied by the reciprocal of the reduction ratio of the planetary gear mechanism 41 to obtain the rotation speed of the sleeves 38 to 40.

The rotation speed of the main gears 22 to 27 is detected by a rotation sensor 60 of the input counter gear 16. Specifically, the rotation speed of the fourth main gear 22 is obtained by multiplying the rotation speed of the counter shaft 12 detected by the rotation sensor 60 by a gear ratio between the fourth counter gear 17 and fourth main gear 22. In a similar manner, the rotation speed of the third main gear 23, second main gear 24, first main gear 25 and reverse main gear 27 can be obtained.

The rotation speed of the main gears 22 to 27 (splines 28 to 33) and the sleeves 38 to 40 are fed to the controller 5. The controller 5 then causes the virtual accelerator pedal 57 to race the engine E in the clutch engaged condition or the counter shaft brake 58 to operate, in order to synchronize the rotation of the sleeves 38 to 40 used for the gear position change with the main gears 22 to 27 (splines 28 to 33) used for the gear position change.

The control device 56 for the automatic clutch assembly 1 has the clutch pedal 62. The clutch pedal 62 is provided for disengaging and engaging the clutch 3 regardless of the disengagement and engagement control made by the controller 5. The clutch pedal 62 is utilized when the controller 5 malfunctions or cannot perform a satisfactory control, e.g., when the vehicle should be started or moved backwards at a very slow speed. The clutch pedal 62 is part of the manual clutch assembly. A depression sensor 63 that is turned on when the clutch pedal 62 is depressed to disengage the clutch 3 is associated with the clutch pedal 62.

The controller 5 stores not only the program for the double clutching operation, as described above, but also a gear position change prohibition program for prohibiting the shifting of the transmission by the double clutching operation or the like when the clutch pedal 62 is stamped over a predetermined period after the start of the gear position change operation or during the shifting.

The controller 5 also issues a gear position change command to the gear shift unit 54 to shift the transmission to a desired gear. This command is automatically generated in accordance with a map from the accelerator pedal depression and vehicle speed, or generated upon a manual operation made by a driver. A timer is built in the controller 5. In the vicinity of the flywheel 6 of the clutch 3, provided is an engine revolution speed sensor 61 for detecting the rotation speed of the engine E. Further, the rotation sensor 59 of the output shaft 11 is also utilized as the vehicle speed sensor.

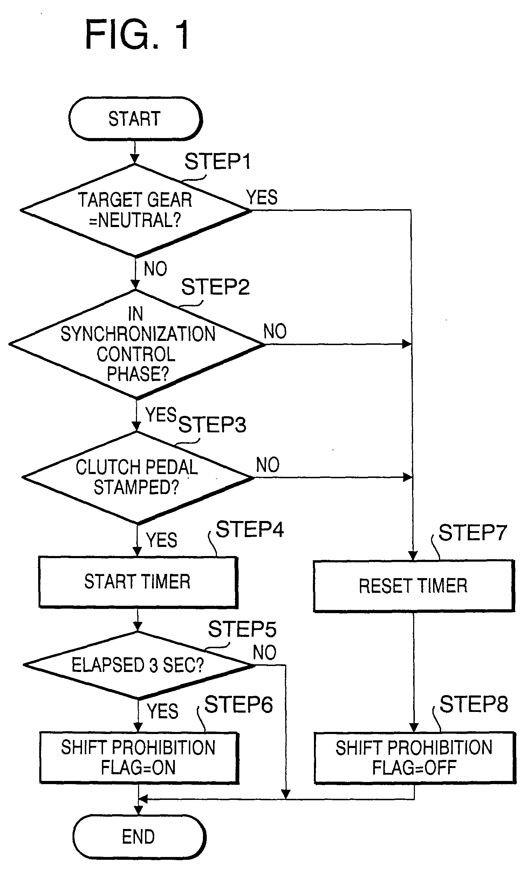

Now, the operation of the apparatus of the invention will be described in reference to Figures 1 to 3.

Referring to Figure 1, illustrated is a flowchart for the control performed by controller 5. After the vehicle is started, it is determined at step 1 whether a desired (target) gear decided in the controller 5 is the neutral. If it is the neutral, the program proceeds to step 7 and the timer is reset. In the subsequent step (STEP 8), the transmission gear position change prohibition flag is lowered (turned off) and the program proceeds to END.

If the shift prohibition flag is not raised, as described above, the gear position change is not hindered according to the control of the invention. Instead, the transmission is shifted by the gear shift unit 54 based on the commands from the controller 5. This is because the double clutching is unnecessary when the target gear is the neutral. A problem raised due to the stamping of the clutch pedal 62 during the double clutching operation will never occur when shifting to the neutral. On the other hand, if the target gear position is other than the neutral, the program proceeds to step 2. Thus, the illustrated flowchart deals with a case where the transmission is shifted to a certain gear position (particularly when the transmission is shifted down).

At step 2, it is determined whether the shifting is to take place in a synchronization control phase. The synchronization control phase is when the shifting up/down is caused using the main shift gear unit 52 without the cone-type synchronization units. If the answer at step 2 is no, i.e., when the transmission is shifted using the split gear assembly 51 or range gear assembly 53 that is equipped with the mechanical synchronization units, the program proceeds to steps 7 and 8.

In this case, the shifting is not prohibited by the control of the invention. Rather, the transmission is shifted by the gear shift unit 54 based on the command from the controller 5. This is because the double clutching control is not performed when the shifting takes place in the split gear assembly 51 and range gear assembly 53 equipped with the synchronization units. A problem associated with the stamping of the clutch pedal 62 during the double clutching control will not occur. On the other hand, if the answer is yes, the program proceeds to step 3.

At step 3, it is determined whether the clutch pedal 62 is stamped, i.e., whether the sensor 63 is turned on. If the clutch pedal 52 is not stamped, the program proceeds to steps 7 and 8. In this instance, the shifting is not prohibited by the control of the invention. The transmission is normally shifted by the gear shift unit 54 under the control of the controller 5.

This is because if the clutch pedal 62 is not stamped (i.e., if the clutch 3 is engaged), the above-described double clutching operation can synchronize the rotation speed of the sleeves 38 to 40 used for the shifting with the rotation speed of the main gears 22 to 27 (splines 28 to 33) by racing the engine E with the imaginary accelerator pedal 57, even when the shifting takes places using the main gear shift unit 52 without the cone-type synchronization unit(s). In this case, the counter shaft brake 58 is operated if necessary.

At step 3, if the clutch pedal 62 is stamped, the program proceeds to step 4. As a result, the controller 5 starts counting of the time by the timer. Subsequently at step 5, it is determined whether the timer counts three seconds. If three seconds have not passed, the program proceeds to END and returns to START. This looping occurs more than once in a second (e.g., once in thirty-two milliseconds).

If the answers at steps 1 to 3 are all maintained to yes over three seconds in this loop, the program proceeds to step 6 whereby a shift prohibition flag is raised (turned on). Specifically, when the target gear is not the neutral, the synchronization control phase is proceeding, the clutch pedal 62 is stamped and these three conditions continue three seconds, the shifting is prohibited at step 6.

This is because if the clutch pedal 62 is accidentally (or unintentionally) stamped to disengage the clutch 3 for three seconds or more during the shifting with the main shift gear unit 52 not equipped with the cone-type synchronization mechanism, the controller 5 cannot engage the clutch 3 in the double clutching operation (i.e., the synchronization by the double clutching becomes impossible) since the clutch disengagement by the clutch pedal 62 has priority over the clutch engagement by the controller 5.

In other words, even if the virtual accelerator pedal 57 is depressed to race the engine E in the double clutching operation, the clutch pedal 62 disengages the clutch 3 in spite of the command from the controller 5 so that the rotation speed of the sleeves 38 to 40 used for the shifting does not match the rotation speed of the main gears 22 to 27 (splines 28 to 33) used for the shifting. This rattles the gears and possibly damages the gears if the shifting is attempted by force (particularly when shifting down).

In order to avoid such inconvenience, in this embodiment, when the shifting is attempted using the main gear shift unit 52 not equipped with the cone-type synchronization mechanism, the shifting is hindered by the controller 5 at step 6 if the clutch pedal 62 is depressed three seconds or more due to accidental placing of a driver's foot on the clutch pedal 62 or the like. It should be noted that "three seconds" in step 5 is an example and the invention is not limited in this regard.

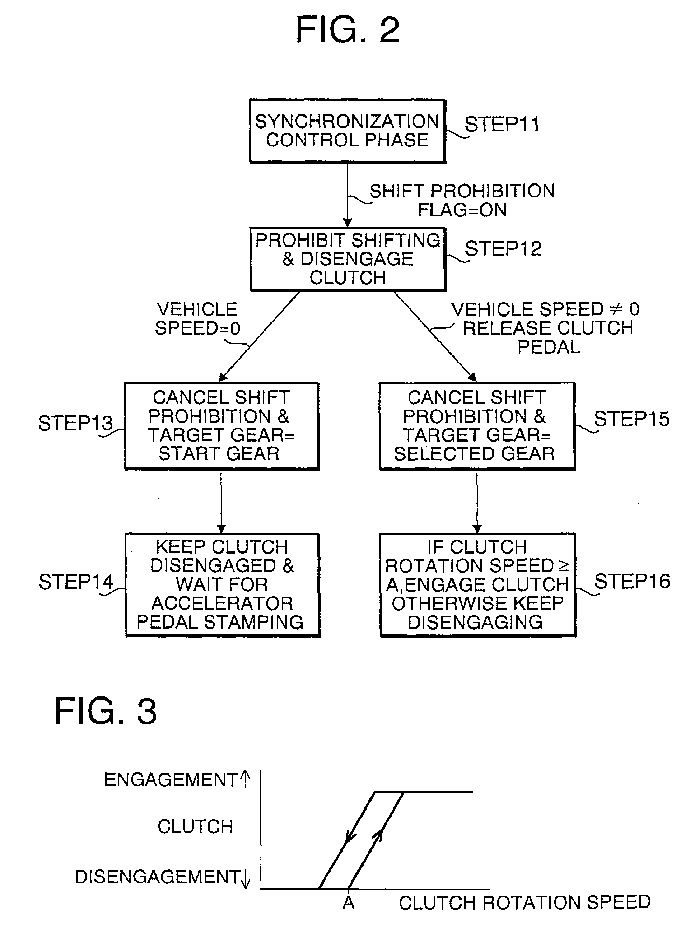

After that, the clutch 3 and transmission 2 will be controlled as illustrated in the flowchart of Figure 2. If the synchronization control phase (STEP 11) is proceeding and the shift prohibition flag is raised, then the controller 5 prohibits the shifting and disengages the clutch 3 at step 12. Subsequently, the controller 5 performs different shift controls depending upon the vehicle speed.

Specifically, when the vehicle speed is zero, the controller 5 cancels the shift prohibition and sets the target gear to a start gear (e.g., the first gear) at step 13. Then, the clutch 3 is maintained disengaged, and the program waits for depressing of the accelerator pedal at step 14. If the accelerator pedal is depressed, the clutch 3 is engaged under the normal control (i.e., the clutch engagement control based on the clutch pedal stamping and engine revolution speed increasing). It should be noted that releasing of the clutch pedal 62 is required prior to the clutch engagement. The reason is that priority is given to the clutch disengagement and engagement caused by the clutch pedal 62 over that by the controller 5.

In the shift control, on the other hand, if the vehicle speed is not zero and the clutch pedal 62 is returned to a free position after step 12, the controller 5 cancels the shift prohibition and then sets the target gear to a selected gear at step 15. The selected gear is a gear that is automatically decided by the controller 5 from a map based on the accelerator pedal depression, vehicle speed, etc. This gear is therefore a most appropriate gear in view of the current vehicle and engine running conditions.

At step 16, if the rotation speed of the clutch 3 is not less than a threshold value A (Figure 3), the clutch 3 is engaged. If the rotation speed of the clutch 3 is less than A, the clutch 3 is kept disengaged. Here, the rotation speed of the clutch 3 is a rotation speed of the driven plate 7 (input shaft 9) (Figure 4). The driven plate 7 is caused to rotate upon rotations of the wheels when the transmission 2 is in a gear position other than neutral.

When the driven plate rotation speed is equal to or faster than A, the clutch 3 is engaged to prevent the vehicle from running in a neutral condition and apply the engine brake. If the driven plate rotation speed is slower than A, the clutch 3 is disengaged to prevent the stalling. The threshold value A for the clutch disengagement and engagement is about 1,000 rpm if the engine E is a large diesel engine, assuming that the idling rotation speed is about 600 rpm.

It should be noted that the present invention is not limited to the illustrated and described embodiment. For example, the structure of the transmission is not limited to that shown in Figure 4. The present invention is also applicable to a normal two-axis four or five-gear transmission.

## Claims

1. For use with a selective clutch assembly including a friction clutch (3), an automatic clutch device for automatically disengaging and engaging the friction clutch (3) with a clutch actuator (4) under the control of a controller (5), and a manual clutch device for disengaging and engaging the friction clutch (3) upon stamping of a clutch pedal (62), a control apparatus (56) suitable for such selective clutch assembly comprising:
a second controller including a clutch control unit (5) for disengaging a friction clutch (3), bringing a transmission (2) into a neutral position, engaging the friction clutch (3), amending an engine revolution speed, disengaging the friction clutch again and engaging a transmission gear into a certain position to shift the transmission (2), and a shift control unit (5) for prohibiting shifting of the transmission (2) when the clutch pedal (62) is kept stamped for a predetermined period after start of the shifting or during the shifting.

2. The control apparatus (56) as in claim 1, **characterized in that** the second controller (5) changes a transmission gear to a gear suitable for start so that a vehicle is brought into a start stand-by condition, when a vehicle speed is zero after the shift control unit prohibits the shifting.

3. The control apparatus (56) as in claim 1 or 2, **characterized in that** the second controller (5) cancels the shift prohibition only when the clutch pedal (62) is released from the stamped condition.

4. The control apparatus (56) as in claim 1 or 2, **characterized in that** the second controller (5) cancels the shift prohibition only when a vehicle speed is not zero and the clutch pedal (62) is released from the stamped condition after the shift prohibition is executed.

5. The control apparatus (56) as in any one of foregoing claims, **characterized in that** the second controller (5) selects a transmission gear suited for current driving conditions as a target gear upon canceling of the shift prohibition.

6. The control apparatus (56) as in any one of foregoing claims, **characterized in that** if a target gear is a neutral, the shift prohibition is not performed.

7. The control apparatus (56) as in any one of foregoing claims, **characterized in that** the shift prohibition is performed only when shifting down.

8. The control apparatus (56) as in any one of foregoing claims, **characterized in that** the shift prohibition is not performed if the shifting takes place using a mechanical synchronization unit.

9. The control apparatus (56) as in any one of foregoing claims, **characterized in that** the predetermined period is three seconds.

10. The control apparatus (56) as in any one of foregoing claims, **characterized in that** the clutch disengagement and engagement by the manual clutch device is given priority over the clutch disengagement and engagement by the automatic clutch device.

11. The control apparatus (56) as in any one of foregoing claims, **characterized in that** the clutch (3) is disengaged when the shift prohibition is performed.

12. For use with a selective clutch assembly including an automatic clutch device for automatically disengaging and engaging a clutch (3) with a clutch actuator (4), and a manual clutch device for disengaging and engaging the clutch (3) upon stamping of a clutch pedal (62), a control apparatus (56) suitable for the selective clutch assembly comprising:
first means (5) for disengaging a clutch (3), bringing a transmission (2) into a neutral position, engaging the clutch (3), amending an engine revolution speed, disengaging the clutch and engaging a transmission gear into a certain position to shift the transmission (2); and
second means (5) for prohibiting shifting of the transmission (2) when the clutch pedal (62) is kept stamped for a predetermined period during the shifting.

13. The control apparatus (56) as in claim 12, **characterized in that** the shift prohibition is canceled when the clutch pedal (62) is released from the stamped condition.

14. The control apparatus (56) as in claim 12 or 13, **characterized in that** the shift prohibition is canceled when a vehicle speed is not zero and the clutch pedal (62) is released from the stamped condition after the shift prohibition is executed.

15. The control apparatus (56) as in claim 12, 13 or 14, **characterized in that** the shift prohibition is not performed if the shifting takes place using a mechanical synchronization unit.

16. The control apparatus (56) as in any one of claims 12 to 15, **characterized in that** if a target gear is a neutral, the shift prohibition is not performed.

17. The control apparatus (56) as in any one of claims 12 to 16, **characterized in that** the clutch is disengaged when the shift prohibition is performed.
